(19) Europäisches Patentamt

European Patent Office

Office européen des brevets

(11) **EP 1 092 947 B1**

(12) **EUROPÄISCHE PATENTSCHRIFT**

(45) Veröffentlichungstag und Bekanntmachung des Hinweises auf die Patenterteilung:
**25.02.2004  Patentblatt 2004/09**

(51) Int Cl.⁷: $G01B\ 21/24$, $G01B\ 11/27$

(21) Anmeldenummer: **00121608.4**

(22) Anmeldetag: **02.10.2000**

(54) **Verfahren zum Ermitteln der Ausrichtung eines zylindrischen Körpers bezüglich einer Referenzrichtung**

Method for the detection of the alignment of a cylindrical body with respect to a reference direction

Procédé pour la détection de l'alignement d'un corps cylindrique par rapport à une direction de référence

(84) Benannte Vertragsstaaten:
**AT BE CH CY DE DK ES FI FR GB GR IE IT LI LU MC NL PT SE**

(30) Priorität: **15.10.1999  DE 19949834**

(43) Veröffentlichungstag der Anmeldung:
**18.04.2001  Patentblatt 2001/16**

(73) Patentinhaber: **Prüftechnik Dieter Busch AG**
**85737 Ismaning (DE)**

(72) Erfinder: **Lysen, Heinrich**
**85748 Garching (DE)**

(74) Vertreter: **Schorer, Reinhard et al**
**Schwan Schwan Schorer**
**Patentanwälte**
**Bauerstrasse 22**
**80796 München (DE)**

(56) Entgegenhaltungen:
**EP-A- 0 928 951**          **DE-A- 3 911 307**
**DE-C- 19 710 837**       **US-A- 5 579 585**

**Beschreibung**

Die vorliegende Erfindung betrifft ein Verfahren zum Ermitteln der Ausrichtung eines zylindrischen Körpers, insbesondere einer Welle oder Walze, bezüglich einer Referenzrichtung, die insbesondere von einer anderen Walze oder Welle vorgegeben ist.

Aus DE 195 46 405 A1 ist ein Verfahren zum Parallelrichten von Wellen oder Walzen bekannt, wobei eine Lagemeßsonde verwendet wird, die mindestens einen optischen Kreisel umfaßt und mit einer Kontaktfläche zum definierten Ansetzen an den auszurichtenden Körper versehen ist, die aus zwei miteinander einen flachen Winkel einschließenden ebenen Flächenäbschnitten besteht. Des weiteren ist die Lagemeßsonde mit einem doppelwirkenden Inklinometer zum Feststellen der Winkelposition der Lagemeßsonde bezüglich der Vertikalen versehen. Bei der Ermittlung der Ausrichtung zweier Körper zueinander wird so vorgegangen, daß zunächst mittels Ansetzen der Lagemeßsonde an den ersten Körper in einer vorgegebenen ersten Meßebene eine Referenzposition ermittelt wird und anschließend innerhalb einer vorgegebenen Zeitspanne nach der Referenzpositionsermittlung die Lage des zweiten Körpers in einer mit der ersten Meßebene übereinstimmenden oder zu dieser parallelen Ebene mittels Ansetzen der Lagemeßsonde an den zweiten Körper ermittelt wird. Im Bedarfsfalle können weitere Lagemessungen dieser Art, d. h. Referenzpositionsermittlung am ersten Körper mit anschließender Lagemessung am zweiten Körper, in einer zweiten Meßebene durchgeführt werden, die mit der ersten Meßebene einen definierten Winkel, beispielsweise 90°, einschließt. Die jeweiligen Messungen erfolgen dadurch, daß die Lagemeßsonde, sofern es sich bei den auszurichtenden Körpern um Wellen oder Walzen handelt, an die Umfangsfläche derselben manuell angesetzt wird.

EP-A-0 928 951 beschreibt ein Verfahren zum gegenseitigen Parallelrichten von Walzen oder Wellen mit den folgenden Schritten:

Mittels einer mindestens einen Piezokreisel enthaltenden, an die auszurichtenden Walzen definiert ansetzbaren Lagemeßsonde wird die Lage einer ersten der auszurichtenden Wellen in einer vorgegebenen ersten Meßebene als Referenzposition ermittelt.

Mittels der Lagemeßsonde wird innerhalb einer vorgegebenen Zeitspanne nach der Referenzpositionsermittlung die Lage einer nächsten Welle in einer mit der ersten Meßebene übereinstimmenden oder zu dieser parallelen Ebene ermittelt.

Die beiden obigen Verfahrensschritte werden bezüglich einer von der ersten Meßebene verschiedenen, mit dieser einen Winkel von 90° einschließenden zweiten Meßebene durchgeführt.

Aufgrund der mit der Lagemeßsonde in den Meßebenen festgestellten Lagedifferenzen werden an den beiden Wellen die notwendigen Lagekorrekturen durchgeführt.

Aus DE 39 11 307 C2 ist ein Verfahren zum Feststellen, ob zwei hintereinander angeordnete Wellen hinsichtlich ihrer Mittelachse fluchten oder versetzt sind, bekannt, wobei auf zwei zu vermessenden Wellen etwa parallel zu deren Mittelachse starr ein Meßzeiger auf der einen Welle und ein Referenzelement auf der anderen Welle angebracht sind, die zusammen einen optoelektronischen Positionsdetektor bilden, der die Position eines zwischen den beiden Elementen reflektierten Lichtstrahls in einer Ebene als Meßwert ermittelt. Die Wellen werden in mindestens fünf verschiedene frei wählbare Meßwinkelpositionen, in denen die Messungen vorgenommen werden, gedreht, wobei die Meßsignale als Vektoren gleichen Ursprungs bzw. Wertepaare in einem Ebenenkoordinatensystem behandelt werden, wobei ferner mittels eines Rechners unter Anwendung von Optimierungsverfahren, insbesondere der Methode der kleinsten Fehlerquadrate, die Kenndaten desjenigen geometrischen Orts der Meßwerte berechnet werden, der sich bei Drehung der Wellen um 360° ergeben würde, und anhand der Kenndaten der so ermittelten Kurve unter Berücksichtigung der festgestellten Winkellagen und der bekannten Drehrichtung der Wellen beim Drehen in die Meßwinkelpositionen mittels des Rechners die räumliche Lage der Wellen zueinander ermittelt wird.

Bei zylindrischen Körpern mit großem Durchmesser ergibt sich aufgrund der praktischen Begrenzung der Abmessungen einer anzusetzenden Lagemeßsonde und der daraus resultierenden begrenzten Größe der Ansetz- bzw. Kontaktfläche der Lagemeßsonde das Problem, daß die Orientierung der Lagemeßsonde bezüglich einer Drehung um eine Achse, die senkrecht zu der Längsachse des zylindrischen Körpers und senkrecht zu der Umfangsfläche steht, durch die Geometrie der Umfangsfläche und der Kontaktfläche nicht mehr sehr genau bestimmt ist, d.h. bei einer horizontal liegenden Walze ist beispielsweise bei Ansetzen der Lagemeßsonde auf die Oberseite der Walze zwar der Elevationswinkel der Lagemeßsonde durch den mechanischen Kontakt relativ genau bestimmt, nicht jedoch der Azimutwinkel. Um die Genauigkeit des Azimutwinkels der Lagemeßsonde in diesem Fall zu vergrößern, müßte der Abstand zwischen den beiden Ansetzkanten der Kontaktfläche und/oder deren Länge vergrößert werden, was jedoch praktisch aus Kosten- und Handlichkeitsgründen beschränkt ist.

Es ist Aufgabe der vorliegenden Erfindung, ein Verfahren zum Ermitteln der Ausrichtung eines zylindrischen Körpers bezüglich einer Referenzrichtung zu schaffen, das einfach und kostengünstig durchzuführen ist und dennoch ein Ergebnis mit hinreichender Genauigkeit auch für Körper mit sehr großem Durchmesser liefert.

Diese Aufgabe wird erfindungsgemäß gelöst durch ein Verfahren, wie es in Anspruch 1 definiert ist. Bei dieser erfindungsgemäßen Lösung ist vorteilhaft, daß durch die Berücksichtigung mindestens einer zweiten Meßposition auf der Umfangsfläche des Körpers mit einem anderen Rotationswinkel die Genauigkeit der Messung insgesamt auf einfache Weise verbessert wird.

Bevorzugte Ausgestaltungen der Erfindung ergeben sich aus den abhängigen Ansprüchen.

Im folgenden ist die Erfindung anhand der beigefügten Zeichnungen näher erläutert, wobei:

Fig. 1 schematisch eine perspektivische Ansicht einer Walze mit angesetzter Lagemeßsonde zeigt;

Fig. 2 schematisch eine Querschnittsansicht einer Walze mit angesetzter Lagemeßsonde in verschiedenen Meßpositionen zeigt;

Fig. 3 eine beispielhafte Auswertung von Meßergebnissen in Polarkoordinatendarstellung zeigt; und

Fig. 4 eine zu der Darstellung von Fig. 3 alternative Darstellung zeigt.

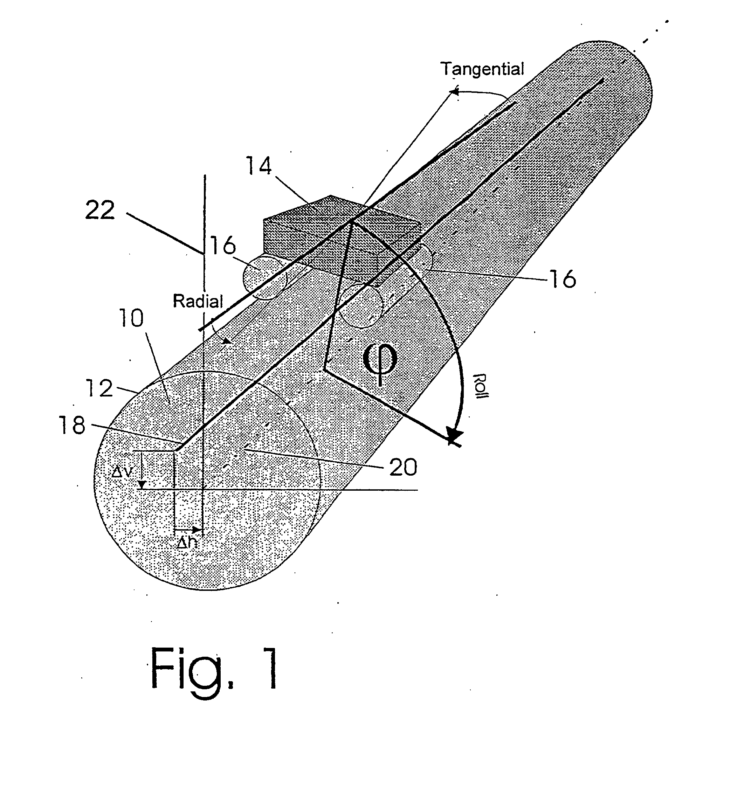

In Fig. 1 ist eine im wesentlichen horizontal liegende Walze 10 mit einer Umfangsfläche 12 dargestellt, auf deren Oberseite eine Lagemeßsonde 14 angesetzt ist, welche an ihrer Unterseite eine Kontaktfläche bzw. Ansetzfläche aufweist, die in der schematischen Darstellung von Fig. 1 von zwei langgestreckten Zylindern 16 gebildet wird, die in einem bestimmten Abstand parallel zueinander angeordnet sind, so daß die Sonde 14 im wesentlichen über zwei parallele Linien in mechanischem Kontakt mit der Walzenumfangsfläche 12 steht. Vorzugsweise ist die Sonde 14 mit drei optischen Kreiseln versehen, z.B. faseroptischen Kreiseln, die jeweils einen optischen Ring bilden, wobei jeder optische Kreisel eine Drehung um eine Achse senkrecht zu seiner Ringebene erfaßt. Zweckmäßigerweise stehen die drei Ringebenen aufeinander senkrecht.

Mit 18 ist in Fig. 1 eine Referenzrichtung bezeichnet, bezüglich welcher die Ausrichtung der Walze 10 ermittelt werden soll, wobei als Ergebnis der Ausrichtungsmessung der horizontale Verkippungswinkel $\Delta h$ sowie der vertikale Verkippungswinkel $\Delta v$ der Walzenachse 20 bezüglich der Referenzrichtung 18 erhalten wird. Die Referenzrichtung 18 wird beispielsweise durch die Orientierung der Achse einer zweiten Walze oder Welle vorgegeben.

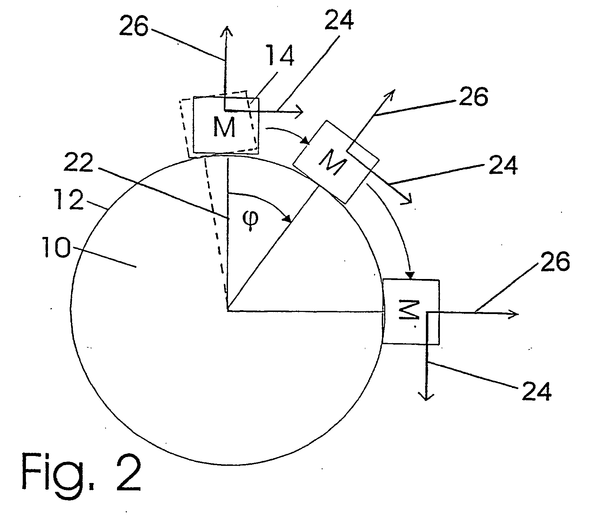

Vor Beginn der Messung wird die Sonde 14 auf die Referenzrichtung 18 geeicht, wobei dann einer der optischen Kreisel der Sonde 14 einen ersten Verkippungswinkel der Sonde 14 und ein anderer optischer Kreisel einen zweiten Verkippungswinkel der Sonde 14 bezüglich der Referenzrichtung 18 erfaßt, wobei der erste Verkippungswinkel den Drehwinkel der Sonde um eine erste, zu der Referenzrichtung 18 senkrecht stehende Richtung 24 (siehe Fig. 2) angibt und der zweite Verkippungswinkel den Drehwinkel der Sonde um eine zweite, zu der Referenzrichtung 18 und der ersten Richtung senkrecht stehende Richtung 26 angibt (als Nullpunkt für den ersten und den zweiten Verkippungswinkel dient die Referenzrichtung). Der erste Verkippungswinkel der Sonde 14 wird im folgenden als "Radial-Winkel" bezeichnet, während der zweite Verkippungswinkel der Sonde 14 als "Tangential-Winkel" bezeichnet wird. Der dritte optische Kreisel der Sonde 14 schließlich erfaßt den Drehwinkel der Sonde 14 um die Referenzrichtung 18. Als Nullpunkt dient dabei eine bezüglich der Referenzrichtung 18 senkrecht stehende Richtung 22, wobei in Fig. 1 und 2 diese Richtung von der Vertikalen gebildet wird. Der Winkel, um den die Sonde um die Referenzrichtung 18 herum bezüglich dieser Richtung, d.h. der Vertikalen, verdreht ist, wird im folgenden als "Roll-Winkel" bezeichnet. Im folgenden sollen also die Begriffe Radial-, Tangential- bzw. Roll-Winkel die momentane bzw. aktuelle Drehung der Lagemeßsonde um drei im Koordinatensystem der Lagemeßsonde 14 ortsfeste, aufeinander senkrecht stehende Achsen bezeichnen.

Bei der in Fig. 1 gezeigten Ausführungsform der Sonde 14 ist diese aufgrund der Kontaktflächenzylinder 16 nur auf der Umfangsfläche 12 der Walze 10 verschiebbar, kann jedoch nicht gegenüber der Umfangsfläche 12 verdreht oder verkippt werden, d.h. die Sonde 14 kann nach dem Ansetzen an die Walze 10 nur in der Walzenlängsrichtung und in der Umfangsrichtung der Walze 10 verschoben werden, ist ansonsten jedoch in ihrer Orientierung bezüglich der Walze 10 festgelegt. Diese beschriebene geometrische Festlegung gilt jedoch aufgrund von Oberflächenunebenheiten, Verschmutzung, mechanischer Elastizität etc. nur näherungsweise, wobei die daraus resultierenden Fehler bei kleinen Walzendurchmessern im wesentlichen den Radial-Winkel der Sonde betreffen, während sie bei großen Walzendurchmessern im wesentlichen den Tangential-Winkel der Sonde betreffen.

Abgesehen von diesen Kontaktfehlern ist die Position der Sonde 14 bezüglich der Welle 10 im wesentlichen durch den Winkel auf dem Umfang 12 bezüglich der Walzenachse 20 festgelegt (die Verschiebung entlang der Walzenachse 20 kann für die vorliegenden Zwecke vernachlässigt werden). Dieser Winkel wird im folgenden als "Rotationswinkel $\varphi$" bezeichnet.

Gemäß Fig. 1 liegt die Sonde 14 im wesentlichen so an der Walze 10 an, daß im Falle von relativ kleinen Fehlorientierungen $\Delta v$ und $\Delta h$ der Walze 10 bezüglich der Bezugsrichtung 18 (was den praxisrelevanten Fall darstellt) der Rollwinkel im wesentlichen dem Rotationswinkel $\varphi$ entspricht (bei gleicher. Eichung), d.h. der Rollwinkel gibt in die Drehung der Sonde 14 um die zu der Walzenachse 20 annähernd parallele Achse 18 an, während der Radial-Winkel die Drehung der Sonde 14 um eine ini wesentlichen senkrecht zu der Walzenachse 20 stehende und tangential bezüglich der Umfangsfläche 12 verlaufende Achse 24 angibt und der Tangential-Winkel die Drehung der Sonde 14 um eine im wesentlichen senkrecht zu der Walzenachse 20 und senkrecht zu der Umfangsfläche 12 stehende Achse 26 angibt. Da der Radial-Winkel und der Tangential-Winkel als Drehungen um im Koordinatensystem der Sonde ortsfeste Achsen definiert sind, drehen sich die beiden letztgenannten Achsen mit dem Rotationswinkel $\varphi$ (d.h. dem Roll-Winkel der Sonde) mit. Der Radial-Winkel und der Tangential-Winkel ändern sich somit mit dem Roll-Winkel der Sonde 14, sofern eine Fehlausrichtung der Walze 10 bezüglich der Referenzrichtung 18 vorliegt.

Das erfindungsgemäße Meßverfahren beruht im wesentlichen auf der Erkenntnis, daß für Meßpositionen mit unterschiedlichen Rotationswinkeln $\varphi$ unterschiedliche Meßgenauigkeiten für die vertikale bzw. horizontale Fehlorientierung $\Delta v$ bzw. $\Delta h$ der Walze 10 bezüglich der Bezugsrichtung 18 auftreten. So kann zwar im Prinzip sowohl die vertikale als auch die horizontale Fehlorientierung $\Delta v$ bzw. $\Delta h$ aus einer einzigen Messung z.B. in der in Fig. 1 gezeigten Position ermittelt werden, wobei unter der Annahme, daß die Sonde 14 genau oben auf der Walze 10 liegt, d.h. der Rollwinkel bezüglich der Horizontalen 22 genau 0° beträgt, der gemessene Radial-Winkel der vertikalen Fehlorientierung $\Delta v$ und der gemessene Tangential-Winkel der horizontalen Fehlorientierung $\Delta h$ entspricht. Bei im Verhältnis zu den Abmessungen der Sonde 14 großem Walzendurchmesser korreliert aufgrund von Oberflächenunebenheiten u.ä. der Tangential-Winkel relativ schlecht mit der entsprechenden Walzenorientierung, während der Radial-Winkel relativ gut mit der Walzenorientierung korreliert. Demgemäß ist in der in Fig. 1 gezeigten Meßposition die direkte Messung der horizontalen Fehlorientierung $\Delta h$ über den Tangential-Winkel mit einem relativ großen Meßfehler behaftet, während sich die vertikale Fehlorientierung $\Delta v$ relativ genau messen läßt.

Wenn die Sonde 14 jedoch beispielsweise um 90° in Umfangsrichtung nach unten gedreht wird (siehe Fig. 2), dann läßt sich in dieser Position die horizontale Fehlorientierung $\Delta h$ über den Radial-Winkel recht genau messen, während sich die vertikale Fehlorientierung $\Delta v$ über den Tangential-Winkel direkt nunmehr nur relativ ungenau messen läßt, da in dieser Position der gemessene Radial-Winkel (der wie oben beschrieben gut mit der Walzenorientierung korreliert) der horizontalen Fehlorientierung entspricht, während der schlecht korrelierende Tangential-Winkel nun der vertikalen Fehlorientierung $\Delta v$ entspricht. Auf diese Weise kann, zumindest solange der Tangential-Winkel relativ klein ist, im Prinzip auf eine Auswertung des Tangential-Winkels verzichtet werden, da der bei unterschiedlichen Rotationswinkeln $\varphi$ gemessene Radial-Winkel sowohl zur Bestimmung der vertikalen Fehlorientierung $\Delta v$ als auch der horizontalen Fehlorientierung $\Delta h$ verwendet werden kann.

Dabei muß die Rotationswinkeldifferenz jedoch nicht notwendigerweise 90° betragen. Vielmehr können auch Messungen in Zwischenpositionen vorgenommen werden. Insbesondere können sich die Meßpositionen gleichmäßig über einen vorgegebenen Bereich des Rotationswinkels verteilen, wie dies in Fig. 2 angedeutet ist. Dabei kann die Meßsonde 14 jeweils einzeln manuell an die verschiedenen Meßpositionen angesetzt werden, oder sie kann nach dem ersten Ansetzen durch manuelles Verschieben entlang der Umfangsrichtung der Walze 10 in die einzelnen Meßpositionen gebracht werden. Alternativ ist es jedoch auch möglich, die Sonde 14 vor Beginn der Messung fest an der Walzenumfangsfläche 12 zu befestigen und dann dadurch in die verschiedenen Meßpositionen zu bringen, indem die Walze 10 um ihre Achse 20 gedreht wird.

In jeder Meßposition werden von der Sonde 14 mindestens der Roll-Winkel und der Radial-Winkel erfaßt, wobei der Roll-Winkel in einfachsten Fall gleich dem Rotationswinkel gesetzt wird und somit die Abhängigkeit des Radial-Winkels vom Rotationswinkel für die einzelnen Meßpositionen ermittelt wird. Aus diesen Meßwerten, die sich auf das Koordinatensystem der Sonde 14 beziehen, kann durch eine geeignete Koordinatentransformation in das Koordinatensystem der Walze 10, d.h. das System beispielsweise der Fabrikhalle, die gewünschte vertikale und horizontale Fehlorientierung $\Delta v$ bzw. $\Delta h$ der Walze 10 ermittelt werden. Im einfachsten Fall erfolgt dies durch die Verwendung der zweidimensionalen Drehmatrix mit dem gemessenen Roll-Winkel als Drehwinkel.

$$radi = \cos(roll)\ \Delta v + \sin(roll)\ \Delta h \qquad (1)$$

$$tang = -\sin(roll)\ \Delta v + \cos(roll)\ \Delta h \qquad (2)$$

wobei

radi = Radial-Winkel
tang = Tangential-Winkel
roll = Roll-Winkel

Gleichung (1) gibt die Abhängigkeit des Radial-Winkels vom Roll-Winkel für ein bestimmtes $\Delta v$ und $\Delta h$ an. Grundsätzlich können somit aus zwei Messungen des Radial-Winkels für zwei verschiedene Roll-Winkel (d.h. Rotati-

onswinkel) die gesuchten $\Delta v$ und $\Delta h$ ermittelt werden. Falls nur zwei Messungen vorgenommen wurden, können $\Delta v$ und $\Delta h$ mit maximaler Genauigkeit bestimmt werden, wenn sich die beiden Meßpositionen um 90° unterscheiden. Grundsätzlich nimmt die Genauigkeit von $\Delta v$ und $\Delta h$ mit der Zahl der unterschiedlichen Messpositionen zu. In diesem Fall ist es zweckmäßig, $\Delta v$ und $\Delta h$ durch Anwendung von Optimierungsverfahren, wie Kurvenanpassung oder Ausgleichsrechnung, z.B. Minimierung der Fehlerquadrate, zu ermitteln. Da die Meßwerte für den Tangential-Winkel aus den genannten Gründen in der Regel recht ungenau sind, werden sie für die Ermittlung von $\Delta v$ und $\Delta h$ in der Regel nicht verwendet.

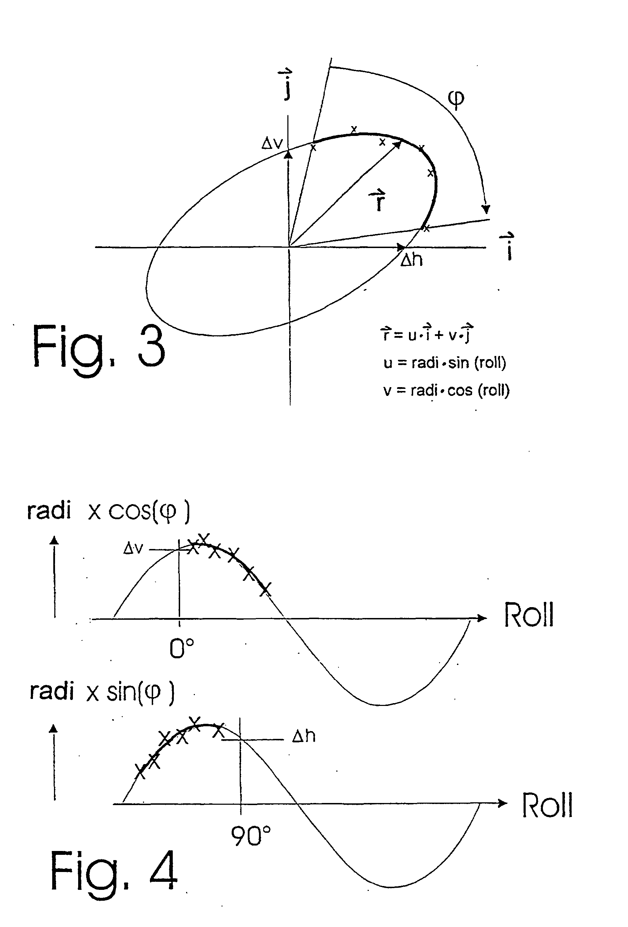

Ein schematisches Beispiel für einen solchen Fall ist in Fig. 3 gezeigt, wo die Abhängigkeit des gemessenen Radial-Winkels von dem Roll-Winkel bzw. Rotationswinkel $\varphi$ in Polarkoordinaten für eine bestimmte vertikale und horizontale Fehlorientierung $\Delta v$ bzw. $\Delta h$ der Walze dargestellt ist. In karthesischen Koordinaten ist dabei x = cos(roll) · radi und y = sin(roll) · radi gesetzt. Für relativ kleine Fehlorientierungen $\Delta v$ bzw. $\Delta h$ ergibt sich dabei als geometrischer Ort, auf dem diese Größen bei kontinuierlicher Messung über einen Rotationswinkel von 360° liegen würden, näherungsweise eine Ellipse. Die tatsächlichen Meßwerte des Radial-Winkels bei unterschiedlichen Roll-Winkeln streuen im Rahmen des jeweiligen Meßfehlers um die theoretisch durch ein bestimmtes $\Delta v$ und ein bestimmtes $\Delta h$ vorgegebene Kurve (hier: Ellipse). Aus den ermittelten Meßwerten kann also mittels der Anwendung von Optimierungsverfahren, insbesondere Kurvenanpassung bzw. Ausgleichsrechnung nach der Methode der kleinsten Fehlerquadrate, der geometrische Ort ermittelt werden, auf dem die Meßdaten bei kontinuierlicher Messung über einen Roll-Winkel bzw. Rotationswinkel von 360° liegen würden, d.h. man erhält als Ergebnis die Parameter der am besten zu den Meßwerten passenden Ellipse. Aus diesen so ermittelten Kurvenparametern kann nun auf die der ermittelten Kurve zugrunde liegende Fehlorientierung $\Delta v$ und $\Delta h$ geschlossen werden (in Fig. 3 ergibt sich $\Delta v$ und $\Delta h$ als der Wert bei 0° bzw. 90°). In Fig. 4 ist eine alternative Darstellung zu Fig. 3 gezeigt, in welcher der Wert von Radial-Winkel mal cos($\varphi$) bzw. Radial-Winkel mal sin($\varphi$) über dem Roll-Winkel aufgetragen ist.

Eine andere Art der Auswertung besteht darin, daß man Gleichung (1) überführt in

$$\text{radi} = A \cdot \sin(\text{roll} + \Delta\varphi) \tag{3}$$

mit: $\tan(\Delta\varphi) = \Delta v/\Delta h$ und

$$A = \sqrt{\Delta v^2 + \Delta h^2}$$

Auch hier reichen im Prinzip zwei Wertepaare für den Radial-Winkel und den Roll-Winkel aus, um A und $\Delta\varphi$ zu bestimmen, woraus dann wiederum die gesuchten $\Delta v$ und $\Delta h$ bestimmt werden können. Genauere Ergebnisse können erhalten werden, wenn mehrere Messungen über einen möglichst großen Bereich des Rollwinkels bzw. Rotationswinkels $\varphi$ durchgeführt und ausgewertet werden, um A und $\Delta\varphi$ zu bestimmen, was dann zweckmäßigerweise durch Ausgleichsrechnung erfolgt.

Das oben beschriebene einfache Modell gilt jedoch nur, solange der Tangential-Winkel relativ klein ist, d.h. solange der Tangential-Winkel durch eine entsprechend gestaltete Kontaktfläche der Sonde 14 relativ genau durch das Anlegen der Sonde 14 an den Walzenumfang 12 durch die Walzenorientierung festgelegt wird. Dies erfordert jedoch, wie oben erwähnt, unter Umständen, vor allem für große Walzendurchmesser, eine aufwendige bzw. unhandliche

Gestaltung der Sonde 14. Das oben beschriebene Meßverfahren kann grundsätzlich jedoch auch für Fälle verwendet werden, in welchen der Tangential-Winkel auch nach dem Anlegen der Sonde 14 an die Walze 10 mehr oder weniger undefiniert ist und deshalb auch relativ große Werte annehmen kann. In diesem Fall muß jedoch der Tangential-Winkel bei jeder Messung zusätzlich zu dem Radial-Winkel und dem Roll-Winkel mit erfaßt werden. Der jeweils gemessene Tangential-Winkel wird dann verwendet, um gegebenenfalls den gemessenen Radial-Winkel und den gemessenen Roll-Winkel in einen entsprechend bezüglich des gemessenen Tangential-Winkels korrigierten Radial-Winkel und einen korrigierten Roll-Winkel umzuwandeln, wobei diese korrigierten Werte dann anstelle der gemessenen Werte der oben beschriebenen Auswertung unterzogen werden. Die korrigierten Werte werden aus einer entsprechenden Koordinatentransformation ermittelt.

Da demzufolge der Tangential-Winkel, solange er von der Sonde 14 gemessen wird, nicht durch das Ansetzen der Sonde 14 an den Walzenumfang 12 festgelegt sein muß, kann die Anlagefläche der Sonde 14 im Extremfall einfach als ebene Fläche ausgebildet sein, so daß sich als Kontaktbereich zwischen der Sonde 14 und der Walzenumfangsfläche 12 im wesentlichen nur eine Gerade ergibt, die in der Umfangsfläche 12 liegt und parallel zu der Walzenachse 20 orientiert ist. In diesem Fall ist die Orientierung der Sonde 14 nur noch in einer Raumrichtung, nämlich entlang der Walzenachse 20, durch das Anlegen an den Walzenumfang 12 festgelegt. Diese Ausführungsform der Meßsonde 14 ist in Fig. 2 schematisch angedeutet, wobei die gestrichelten Linien ein Abrollen der Sonde 14 auf dem Umfang 12 der Walze 10 andeuten, was zu einem geänderten Rotationswinkel φ führt.

Eine Verkippung der Sonde 14 um die Walzenachse 20, d.h. ein Abrollen der Sonde 14 auf dem Walzenumfang 12, entspricht dabei im wesentlichen der Überführung in eine neue Meßposition mit entsprechend anderem Rotationswinkel φ, während eine Verdrehung der Sonde 14 an der Kontaktstelle um eine Achse, die durch die Kontaktgerade geht und senkrecht zu der Walzenachse 20 steht, d.h. eine Änderung des Tangential-Winkels, durch die Messung des Tangential-Winkels und die Berücksichtigung der Auswirkung des Tangential-Winkels auf die Bedeutung des Radial-Winkels und des Roll-Winkels hinsichtlich der Orientierung der Walze 10 durch die Berechnung des korrigierten Roll-Winkels und des korrigierten Radial-Winkels kompensiert werden kann. Bei dieser Ausführungsform kann also eine wesentlich vereinfachte Kontaktfläche für die Sonde 14 verwendet werden.

Dieser Ausführungsform der Sonde 14 liegt das allgemeine Konzept zugrunde, daß aus der vollständigen Kenntnis der Lage der Sonde 14 im Raum bezüglich der Referenzrichtungen 18 und 22 in dem Koordinatensystem der Sonde 14 (durch Messung des Radial-, Tangential- und Roll-Winkels) und der Kenntnis der Form des zu vermessenden Körpers (Zylinderfläche) sowie dem Wissen, daß die Sonde 14 in jeder Meßposition auf dieser Zylinderfläche 12 liegt, über entsprechende Koordinatentransformationen die vertikale und horizontale Fehlorientierung Δv bzw. Δh der Walze 10 auch bei "undefiniertem" Tangential-Winkel ermittelt werden können. Maßgeblich hierbei ist, daß die Auswertung der Meßdaten in einem günstig gewählten Koordinatensystem erfolgt, wobei dies ansonsten wie oben beschrieben vorzugsweise durch eine Kurvenanpassung bzw. Ausgleichsrechnung mit theoretisch ermittelten Kurven erfolgt. Gegebenenfalls müssen also, im Unterschied zu der ersten Ausführungsform, die gemessenen Radial-, Tangential- und Roll-Winkel vor der Auswertung in das entsprechende Koordinatensystem gemäß den oben beschriebenen geometrischen Randbedingungen transformiert werden.

Bisher wurde der Fall betrachtet, daß die Sonde die für die Auswertung gewünschten Meßwerte für den Radial-Winkel (und ggfs. den Tangential-Winkel) direkt liefert. Dies ist jedoch bei erhältlichen Lagemeßsonden oft nicht der Fall. Vielmehr gibt die Lagemeßsonde standardmäßig oft nicht den eigentlichen Meßwert für den Radial-Winkel und. den Tangential-Winkel aus, sondern nimmt mittels des gemessenen Roll-Winkels bereits eine Transformation der Meßergebnisse aus dem Koordinatensystem der Sonde in das Laborkoordinatensystem (d.h. das Koordinatensystem der Fabrikhalle) vor und gibt dann diese transformierten Werte aus, die üblicherweise "Pitch-Winkel" und "Yaw-Winkel" genannt werden und im vorliegenden Fall Δv und Δh entsprechen würden (der Roll-Winkel wird jedoch nicht transformiert und entspricht dem bisher betrachteten Roll-Winkel). Diese von der Sonde ausgegebenen Pitch-Winkel und Yaw-Winkel würden sich für Messungen bei verschiedenen Roll-Winkeln bzw. Rotationswinkeln φ nur im Rahmen des Meßfehlers ändern, während die oben definierten Radial-Winkel bzw. Tangential-Winkel systematisch vom Roll-Winkel bzw. Rotationswinkel φ gemäß Gleichung (1) bzw. (2) abhängen.

Um also in der oben angegebenen Weise die gesuchte Fehlorientierung Δv und Δh ermitteln zu können, ist es erforderlich, die unerwünschte Koordinatentransformation durch die Sonde rückgängig zu machen, um für jede Messung aus den von der Sonde ausgegebenen Werten für den Pitch-Winkel, Yaw-Winkel und Roll-Winkel zumindest den zugehörigen Radial-Winkel (der Tangential-Winkel ist in der Regel viel ungenauer und ist deshalb meist nicht von Interesse) zu ermitteln. Dabei gilt:

$$\text{radi} = \cos(\text{roll}) \times \text{Pitch-Winkel} + \sin(\text{roll}) \times \text{Yaw-Winkel} \qquad (4)$$

$$\text{tang} = -\sin(\text{roll}) \times \text{Pitch-Winkel} + \cos(\text{roll}) \times \text{Yaw-Winkel} \qquad (5)$$

wobei

radi = Radial-Winkel
tang = Tangential-Winkel
roll = Roll-Winkel

Die für jede Messung mittels Gleichung (4) berechneten Radial-Winkel können dann in der oben beschriebenen Weise ausgewertet werden, um über Gleichung (1) die Fehlorientierung Δv und Δh zu ermitteln.

**Patentansprüche**

1. Verfahren zum Ermitteln der Ausrichtung eines zylindrischen Körpers (10) bezüglich einer Referenzrichtung (18), wobei mittels einer Lagemeßsonde (14), die auf die Referenzrichtung geeicht ist, in einer ersten Meßposition auf der Umfangsfläche (12) des Körpers (10) eine erste Lagemessung durchgeführt wird und in mindestens einer zweiten Meßposition auf der Umfangsfläche (12), des Körpers (10), die sich sich durch ihren Rotationswinkel ($\varphi$) in Umfangsrichtung bezüglich der Körperachse (20), von der ersten Meßposition unterscheidet, eine zweite Lagemessung durchgeführt wird, wobei jeweils auch der Rotationswinkel von der Lagemeßsonde (14) erfaßt wird, und aus den ermittelten Meßdaten einschließlich der jeweligen Rotationswinkel die Ausrichtung des Körpers (10) bezüglich der Referenzrichtung (18) errechnet wird.

2. Verfahren nach Anspruch 1, **dadurch gekennzeichnet, daß** die Rotationswinkeldifferenz zwischen der ersten und der zweiten Meßposition etwa 90 Grad beträgt.

3. Verfahren nach Anspruch 1 oder 2, **dadurch gekennzeichnet, daß** eine Mehrzahl von Meßpositionen vorgesehen ist, die sich im wesentlichen gleichmäßig über einen vorgegebenen Bereich des Rotationswinkels ($\varphi$) verteilen.

4. Verfahren nach einem der vorhergehenden Ansprüche , **dadurch gekennzeichnet, daß** die Ausrichtung des Körpers (10) durch die Anwendung von Optimierungsverfahren, insbesondere Kurvenanpassung bzw. Ausgleichsrechnung, aus den Meßdaten ermittelt wird.

5. Verfahren nach Anspruch 4, **dadurch gekennzeichnet, daß** aus den Meßdaten durch Anwendung von Optimierungsverfahren, insbesondere Kurvenanpassung bzw. Ausgleichsrechnung, der geometrische Ort ermittelt wird, auf dem die Meßdaten bei kontinuierlicher Messung über einen Rotationswinkel ($\varphi$) von 360 Grad liegen würden und aus den Parametern des so ermittelten geometrischen Orts die Ausrichtung des Körpers (10) ermittelt wird.

6. Verfahren nach einem der vorhergehenden Ansprüche, **dadurch gekennzeichnet, daß** die Lagemeßsonde (14) ihre Drehung um drei im Koordinatensystem der Lagemeßsonde (14) ortsfeste, aufeinander im wesentlichen senkrecht stehende Achsen (24, 26, 18) als Radial-, Tangential- bzw. Rollwinkel bzgl. der Referenzrichtung erfaßt, wobei die Lagemeßsonde (14) in den Meßpositionen so an dem Körper (10) liegt, daß der Roll-Winkel im wesentlichen die Drehung der Lagemeßsonde (14) um eine zu der Körperachse (20) annähernd parallele Achse (18), der Radial-Winkel die Drehung der Lagemeßsonde um eine im wesentlichen senkrecht zu der Körperachse (20) stehende und tangential bezüglich der Umfangsfläche (12) verlaufende Achse (24) und der Tangential-Winkel die Drehung der Lagemeßsonde um eine im wesentlichen senkrecht zu der Körperachse (20) und der Umfangsfläche (12) stehende Achse (26) angibt, wobei sich die Orientierung der Achsen für den Radialwinkel und den Tangential-Winkel mit dem Roll-Winkel dreht.

7. Verfahren nach Anspruch 6, **dadurch gekennzeichnet, daß** die Lagemeßsonde bei jeder Messung aus dem gemessenen Radial-, Tangential- und Roll-Winkel durch Koordinatentransformation in das Koordinatensystem der Referenzrichtung einen Pitch-Winkel und einen Yaw-Winkel, die der vertikalen bzw. horizontalen Verkippung der Sonde entsprechen, ermittelt und diese statt der Meßergebnisse für den Radial-Winkel und den Tangential-Winkel ausgibt, wobei mindestens der Radial-Winkel durch Rücktransformation ermittelt wird.

8. Verfahren nach Anspruch 6 oder 7, **dadurch gekennzeichnet, daß** in jeder Meßposition der Radial-Winkel erfaßt wird und die Ausrichtung des Körpers (10) aus der so ermittelten Abhängigkeit des Radial-Winkels vom Rotationswinkel ($\varphi$) ermittelt wird.

9. Verfahren nach Anspruch 8, **dadurch gekennzeichnet, daß** in jeder Meßposition der zugehörige Rotationswinkel ($\varphi$) als der von der Lagemeßsonde (14) erfaßte Roll-Winkel angenommen wird.

10. Verfahren nach Anspruch 6 oder 7, **dadurch gekennzeichnet, daß** in jeder Meßposition der Roll-Winkel, der Radial-Winkel und der Tangential-Winkel erfaßt werden, um einen korrigierten Radial-Winkel und einen korrigierten Roll-Winkel, der dem Rotationswinkel ($\varphi$) entspricht, zu berechnen, die statt der gemessenen Werte bei der Berechnung der Ausrichtung des Körpers (10) verwendet werden.

11. Verfahren nach Anspruch 10, **dadurch gekennzeichnet, daß** der Tangential-Winkel verwendet wird, um aus dem gemessenen Radial-Winkel den korrigierten Radial-Winkel zu berechnen und um aus dem gemessenen Roll-Winkel den korrigierten Roll-Winkel zu berechnen.

12. Verfahren nach Anspruch 8 oder 9, **dadurch gekennzeichnet, daß** bezüglich der einzelnen Meßpositionen keine wesentliche Drehung oder Verkippung der Lagemeßsonde (14) bezüglich der Umfangsfläche (12) des Körpers (10) erfolgen kann.

13. Verfahren nach Anspruch 12, **dadurch gekennzeichnet, daß** die Lagemeßsonde (14) vor der Messung fest an dem Köper (10) angebracht wird und durch Rotation des Körpers (10) um seine Körperachse (20) in die jeweilige Meßposition gebracht wird.

14. Verfahren nach Anspruch 12, **dadurch gekennzeichnet, daß** die Lagemeßsonde (14) durch manuelles Ansetzen, insbesondere durch Verschieben in Umfangsrichtung des Körpers (10), in die einzelnen Meßpositionen gebracht wird.

15. Verfahren nach Anspruch 14, **dadurch gekennzeichnet, daß** die Ansatzseite der Lagemeßsonde (14) so ausgebildet ist, daß die Lagemeßsonde (14) nach dem Ansetzen an den Umfang (12) des Körpers (10) nur in Körperlängsrichtung und in Umfangsrichtung des Körpers (10) verschiebbar ist, ansonsten in ihrer Orientierung bezüglich des Körpers (10) fest ist.

16. Verfahren nach Anspruch 15, **dadurch gekennzeichnet, daß** die Ansatzseite der Lagemeßsonde (14) zwei parallele, in Abstand voneinander angeordnete Ansatzflächen (16) aufweist.

17. Verfahren nach Anspruch 10 oder 11, **dadurch gekennzeichnet, daß** die Ansatzseite der Lagemeßsonde (14) im wesentlichen als eine ebene Fläche ausgebildet ist.

18. Verfahren nach einem der vorhergehenden Ansprüche, **dadurch gekennzeichnet, daß** die Lagemeßsonde (14) mindestens einen optischen Kreisel enthält.

**Claims**

1. Method for determining the alignment of a cylindrical body (10) with respect to a reference direction (18), with a first position measurement being carried out by means of a position measurement probe (14) which is calibrated to the reference direction, in a first measurement position on the circumferential surface (12) of the body (10), and with a second position measurement being carried out in at least one second measurement position on the circumferential surface (12) of the body (10), whose rotation angle ($\varphi$) differs from the first measurement position in the circumferential direction with respect to the body axis (20), with the rotation angle also in each case being detected by the position measurement probe (14), and with the alignment of the body (10) with respect to the reference direction (18) being calculated from the determined measurement data, including the respective rotation angles.

2. Method according to Claim 1, **characterized in that** the rotation angle difference between the first measurement position and the second measurement position is approximately 90 degrees.

3. Method according to Claim 1 or 2, **characterized in that** two or more measurement positions are provided and are distributed essentially uniformly over a predetermined range of the rotation angle ($\varphi$).

4. Method according to one of the preceding claims, **characterized in that** the alignment of the body (10) is determined from the measurement data by use of optimization methods, in particular curve matching and/or a regression calculation.

5. Method according to Claim 4, **characterized in that** the geometric locus at which the measurement data will be located if measurements are carried out continuously over a rotation angle ($\varphi$) of 360 degrees is determined from the measurement data by use of optimization methods, in particular curve matching and/or regression calculation, and the alignment of the body (10) is determined from the parameters of the geometric locus determined in this way.

6. Method according to one of the preceding claims, **characterized in that** the position measurement probe (14) detects its rotation about three axes (24, 26, 18), which have fixed positions in the coordinate system of the position measurement probe (14) and are essentially at right angles to one another, as radial, tangential and roll angles with respect to the reference direction, with the position measurement probe (14) when in the measurement positions resting on the body (10) such that the roll angle essentially indicates the rotation of the position measurement probe (14) about an axis (18) which is approximately parallel to the body axis (20), the radial angle indicates the rotation of the position measurement probe (14) about an axis (24) which is essentially at right angles to the body axis (20) and runs tangentially with respect to the circumferential surface (12), and the tangential angle indicates the rotation of the position measurement probe (14) about an axis (26) which is essentially at right angles to the body axis (20) and to the circumferential surface (12), with the orientation of the axes for the radial angle and for the tangential angle rotating with the roll angle.

7. Method according to Claim 6, **characterized in that**, for each measurement, the position measurement probe uses the measured radial, tangential and roll angles to determine a pitch angle and a yaw angle, which correspond to the vertical and horizontal tilt, respectively, of the probe by coordinate transformation to the coordinate system of the reference direction, and outputs these angles instead of the measurement results for the radial angle and for the tangential angle, with at least the radial angle being determined by reverse transformation.

8. Method according to Claim 6 or 7, **characterized in that**, in each measurement position, the radial angle is detected and the alignment of the body (10) is determined from the relationship determined in this way between the radial angle and the rotation angle ($\varphi$).

9. Method according to Claim 8, **characterized in that**, in each measurement position, the associated rotation angle ($\varphi$) is assumed to be the roll angle detected by the position measurement probe (14).

10. Method according to Claim 6 or 7, **characterized in that**, in each measurement position, the roll angle, the radial angle and the tangential angle are detected, in order to calculate a corrected radial angle and a corrected roll angle which corresponds to the rotation angle ($\varphi$), and these are used instead of the measured values for the calculation of the alignment of the body (10).

11. Method according to Claim 10, **characterized in that** the tangential angle is used to calculate the corrected radial angle from the measured radial angle, and to calculate the corrected roll angle from the measured roll angle.

12. Method according to Claim 8 or 9, **characterized in that** no significant rotation or tilting of the position measurement probe (14) with respect to the circumferential surface (12) of the body (10) can take place with respect to the individual measurement positions.

13. Method according to Claim 12, **characterized in that** the position measurement probe (14) is fitted firmly to the body (10) before the measurement, and is moved to the respective measurement position by rotation of the body (10) about its body axis (20).

14. Method according to Claim 12, **characterized in that** the position measurement probe (14) is moved to the individual measurement positions by manual contact, in particular by moving it in the circumferential direction of the body (10).

15. Method according to Claim 14, **characterized in that** the contact face of the position measurement probe (14) is designed such that, after making contact with the circumference (12) of the body (10), the position measurement probe (14) can be moved only in the longitudinal direction of the body and in the circumferential direction of the body (10), and otherwise its orientation with respect to the body (10) is fixed.

16. Method according to Claim 15, **characterized in that** the contact face of the position measurement probe (14) has two parallel contact surfaces (16) which are arranged at a distance from one another.

17. Method according to Claim 10 or 11, **characterized in that** the contact face on the position measurement probe (14) is essentially in the form of a planar surface.

18. Method according to one of the preceding claims, **characterized in that** the position measurement probe (14) contains at least one optical gyro.

**Revendications**

1. Procédé pour la détection de l'alignement d'un corps cylindrique (10) par rapport à une direction de référence (18), une première mesure de position étant effectuée dans une première position de mesure sur la surface de la périphérie (12) du corps (10) à l'aide d'un capteur de mesure de position (14) calibré sur la direction de référence, et une seconde mesure de position étant effectuée dans au moins une seconde position de mesure sur la surface de la périphérie (12) du corps (10), différente de la première position de mesure par son angle de rotation ($\varphi$) dans la direction de sa périphérie par rapport à l'axe (20) du corps, l'angle de rotation du capteur de mesure de position (14) étant à chaque fois également détecté, et l'alignement du corps (10) par rapport à la direction de référence (18) étant calculé à partir des données déterminées par les mesures, y compris à partir des angles de rotation respectifs.

2.  Procédé selon la revendication 1, **caractérisé en ce que** la différence d'angle de rotation entre la première et la seconde position de mesure est d'environ 90°.

3.  Procédé selon la revendication 1 ou 2, **caractérisé en ce qu'**une pluralité de positions de mesure est prévue, réparties de manière pour l'essentiel régulière sur une plage donnée de l'angle de rotation ($\varphi$).

4.  Procédé selon l'une des revendications précédentes, **caractérisé en ce que** l'alignement du corps (10) est déterminé par l'utilisation de procédés d'optimisation, notamment d'ajustement des courbes ou de calcul de compensation sur la base des données obtenues par mesure.

5.  Procédé selon la revendication 4, **caractérisé en ce que** le lieu géométrique où se situeraient les données obtenues par mesure dans le cas d'une mesure continue sur un angle de rotation ($\varphi$) de 360° est déterminé sur la base des données obtenues par mesure, par l'utilisation de procédés d'optimisation, notamment d'ajustement des courbes ou de calcul de compensation, et **en ce que** l'alignement du corps (10) est déterminé à partir des paramètres du lieu géométrique ainsi déterminé.

6.  Procédé selon l'une des revendications précédentes, **caractérisé en ce que** le capteur de mesure de position (14) détecte sa rotation par rapport à la direction de référence autour de trois axes (24, 26, 18) fixes dans le système de coordonnées du capteur de mesure de position (14), pour l'essentiel perpendiculaires les uns par rapport aux autres, sous la forme d'angles respectivement radial, de tangence et de roulis, le capteur de mesure de position (14) étant positionné, aux positions de mesure, contre le corps (10) de telle manière que l'angle de roulis indique pour l'essentiel la rotation du capteur de mesure de position (14) autour d'un axe (18) sensiblement parallèle à l'axe (20) du corps, l'angle radial indique la rotation du capteur de mesure de position (14) autour d'un axe (24) pour l'essentiel perpendiculaire à l'axe (20) du corps et tangent à la surface de la périphérie (12) et l'angle de tangence indique la rotation du capteur de mesure de position (14) autour d'un axe (26) pour l'essentiel perpendiculaire à l'axe (20) du corps et à la surface de la périphérie (12), l'orientation des axes, pour l'angle radial et l'angle de tangence, tournant avec l'angle de roulis.

7.  Procédé selon la revendication 6, **caractérisé en ce que**, à chaque mesure, le capteur de mesure de position détermine sur la base des angles radial, de tangence et de roulis mesurés, par transformation de coordonnées dans le système de coordonnées de la direction de référence, un angle d'inclinaison longitudinale et un angle de lacet qui correspondent au basculement respectivement vertical et horizontal du capteur, et **en ce qu'**il délivre ces derniers angles à la place des résultats de la mesure de l'angle radial et de l'angle de tangence, au moins l'angle radial étant déterminé par transformée inverse.

8.  Procédé selon la revendication 6 ou 7, **caractérisé en ce que**, dans chaque position de mesure, l'angle radial est détecté et l'alignement du corps (10) est déterminé sur la base de la dépendance ainsi déterminée de l'angle radial par rapport à l'angle de rotation ($\varphi$).

9.  Procédé selon la revendication 8, **caractérisé en ce que**, dans chaque position de mesure, l'angle de rotation ($\varphi$) correspondant est pris en compte comme angle de roulis détecté par le capteur de mesure de position (14).

10. Procédé selon la revendication 6 ou 7, **caractérisé en ce que**, dans chaque position de mesure, l'angle de roulis, l'angle radial et l'angle de tangence sont détectés afin de calculer un angle radial corrigé et un angle de roulis corrigé, qui correspond à l'angle de rotation ($\varphi$), ces angles étant utilisés à la place des valeurs mesurées pour le calcul de l'alignement du corps (10).

11. Procédé selon la revendication 10, **caractérisé en ce que** l'angle de tangence est utilisé pour calculer, à partir de l'angle radial mesuré, l'angle radial corrigé, et pour calculer, à partir de l'angle de roulis mesuré, l'angle de roulis corrigé.

12. Procédé selon la revendication 8 ou 9, **caractérisé en ce que**, pour les différentes positions de mesure, aucune rotation ou basculement sensible du capteur de mesure de position (14) par rapport à la surface de la périphérie (12) du corps (10) ne peut avoir lieu.

13.  Procédé selon la revendication 12, **caractérisé en ce que** le capteur de mesure de position (14) est monté fixe sur le corps (10) avant la mesure et est amené à chaque position de mesure par rotation du corps (10) autour de son axe (20) de corps.

14.  Procédé selon la revendication 12, **caractérisé en ce que** le capteur de mesure de position (14) est amené aux différentes positions de mesure par mise en appui manuelle, notamment par déplacement dans la direction de la périphérie du corps (10).

15.  Procédé selon la revendication 14, **caractérisé en ce que** le côté d'appui du capteur de mesure de position (14) est formé de telle sorte que le capteur de mesure de position (14), après mise en appui sur la périphérie (12) du corps (10), ne puisse plus être déplacé que dans la direction longitudinale du corps et dans la direction de la périphérie du corps (10), son orientation par rapport au corps (10) étant fixe pour les autres mouvements.

16.  Procédé selon la revendication 15, **caractérisé en ce que** le côté d'appui du capteur de mesure de position (14) présente deux surfaces d'appui (16) parallèles disposées à distance l'une de l'autre.

17.  Procédé selon la revendication 10 ou 11, **caractérisé en ce que** le côté d'appui du capteur de mesure de position (14) est formé pour l'essentiel d'une surface plane.

18.  Procédé selon l'une des revendications précédentes, **caractérisé en ce que** le capteur de mesure de position (14) comporte au moins un gyroscope optique.

Fig. 1

Fig. 2

Fig. 3

$$\vec{r} = u \cdot \vec{i} + v \cdot \vec{j}$$
$$u = radi \cdot \sin (roll)$$
$$v = radi \cdot \cos (roll)$$

radi × cos($\varphi$)

Roll

radi × sin($\varphi$)

Roll

Fig. 4